# EUROPEAN PATENT SPECIFICATION

(11) **EP 3 308 380 B1**
(45) Date of publication and mention of the grant of the patent: **25.11.2020**
(21) Application number: 16777515.4
(22) Date of filing: 12.04.2016
(51) Int. Cl.: G21C 1/30, G21C 1/32, G21C 3/322, G21C 7/30, G21D 5/02, G21C 3/16, G21C 11/02, G21C 15/04, G21C 15/06

(54) **TRANSPORTABLE NUCLEAR POWER GENERATOR**
TRANSPORTIERBARER KERNKRAFTGENERATOR
GENERATEUR DE PUISSANCE NUCLEAIRE TRANSPORTABLE

(30) Priority: 09.04.2015 US 201562178400 P; 07.10.2015 US 201562284707 P
(43) Date of publication of application: 18.04.2018
(73) Proprietor: Filippone, Claudio, College Park, MD 20740 (US)
(72) Inventor: Filippone, Claudio, College Park, MD 20740 (US)
(74) Representative: Romano, Giuseppe
(86) International application number: PCT/US2016/027102
(87) International publication number: WO 2016/164935

(56) References cited:
- WO-A1-99/45545
- US-A- 4 826 652
- US-A- 5 818 892
- US-A1- 2014 152 098
- US-A1- 2015 098 544
- Vishal K Patel: "A MULTI-MODULAR NEUTRONICALLY COUPLED POWER GENERATION", A Thesis, 1 May 2014 (2014-05-01), pages 1-86, XP055491448, Retrieved from the Internet: URL:https://oaktrust.library.tamu.edu/bits tream/handle/1969.1/ETD-TAMU-2012-05-10904 /PATEL-THESIS.pdf?sequence=2&isAllowed=y [retrieved on 2018-07-10]
- PATEL: 'A MULTI-MODULAR NEUTRONICALLY COUPLED POWER GENERATION SYSTEM.' THESIS, [Online] 01 May 2014, pages 1 - 86, XP055491448 Retrieved from the Internet: <URL:HTTP://OAKTRUST.LIBRARY.TAMU.EDU/1969. 1/ETD-TAMU-2012-05-10904?SHOW=FULL>
- GAUTHIER ET AL.: 'ANTARES: The HTR/VHTR project at Framatome ANP, 2nd International Topical Meeting on HIGH TEMPERATURE REACTOR TECHNOLOGY.', [Online] September 2004, XP055321369 Retrieved from the Internet: <URL:http:/www.uxc.com/smr/Library%5CDesign %20specific/ANTARES/Papers/ 2004%20-%20ANTARES%20-%20The%20HTR- VHTR%20project%20at%20Framatome%20ANP.pdf>

## Description

### FIELD OF THE INVENTION

The present invention relates generally to transportable and distributable electric power and process heat generation by means of a micro modular, compact, transportable, inherently safe nuclear generator deployable and retrievable within a few hours from reactor shut-down, comprising power conversion and conditioning for remote electric generation via combined Brayton and Rankine power cycles.

### BACKGROUND

Nuclear generators comprise nuclear cores that naturally produce decay thermal energy after shut down. Among several factors, the amount of energy nuclear fuel produces after shutdown is proportional to its power generation history and power density. To avoid overheating of the nuclear fuel, decay heat energy must be transferred from the nuclear core by means of redundant heat transfer mechanisms generally supported by systems external to the core. These systems require complex networks of piping thermal-hydraulically coupling the core to heat exchangers generally located within facilities at a certain distance from the vessel containing the nuclear core and utilized to transfer thermal energy to the environment (i.e. the Ultimate Heat Sink). Coolant through the core cooling heat exchangers may actively circulate by means of electrically driven re-circulators (i.e. pumps, blowers). Alternatively, coolant may passively circulate through the core by gravity-driven natural circulation mechanisms based on coolant density changes. Modern nuclear reactors, independently of theirsize, rely on redundant core decay heat removal systems that may be operated passively, actively or a combination of both and are configured to operate external to the pressure vessel containing the nuclear fuel.

To remove decay thermal energy from the core, the designs adopting "active" safety features extensively rely on electric power for the core to be maintained within safe temperatures under all operating conditions as well as during core shut-down. To ensure safe operation, designs relying on active safety systems require access to electric power via dedicated redundant on-site emergency diesel generators (EDGs) and to off-site multiple power grids at all times.

Designs relying on passive safety features, on the other hand, rely on gravity and large inventories of coolant (i.e. water), generally stored in tanks or water storage structures (i.e. lined concrete pools) positioned at relatively high elevations with respect to the nuclear core. The elevation differential between the core and the coolant storage tank or structure is required to ensure the coolant undergoes natural circulation siphoning and effectively remove decay thermal energy from the core. For passive safety features based on large coolant inventories, adequately provide long-term decay heat removal is highly dependent on the ability of replenishing coolant inventories over relatively short amounts of time. Core cooling effectiveness based on passive recirculation systems is strongly dependent on the environmental temperature and humidity conditions represented by the Ultimate Heat Sink. Generally, as environmental temperature increases, the ability to passively and effectively execute natural convective cooling becomes gradually impaired. As a result, passive decay heat removal based on gravity-driven coolant recirculation is best suitable for nuclear generators operating in mild climates.

Passive and active safety systems are formed by sets of components that generally develop externally to the pressure vessel housing the core. The result is a complex system of redundant piping, valves, heat exchangers for passive systems with the addition of pumps/blowers and motive power managed and monitored by control cabling.

Nuclear cores of commercially operating reactors, as well as those of water moderated Small Modular Reactor (SMR) designs are generally loaded with nuclear fuels utilizing elements cladded with materials that oxidize in the presence of high temperature water/steam. As the core experience overheating due, for example, to loss of coolant, or failure of the active or passive core decay heat removal systems, chemical reactions between cladding materials and water/steam result in the production of hydrogen. Hydrogen then accumulates and self ignites, thereby posing severe safety challenges. To address hydrogen production as a result of nuclear accidents, nuclear power plants employ redundant hydrogen management equipment to, for example, execute controlled ignitions and prevent accumulation of large hydrogen amounts. These safety systems do require electric power to operate and further add complexity to the overall balance of plant while increases operating cost. Redundancies are generally the result of probabilistic risk assessments and postulated design basis accidents. Despite redundancies represented by multiple power grid accessibility, multiple emergency diesel generators, and the availability of on-site power grid supplied by batteries with a capacity to provide control and emergency motive power for several hours, core meltdown and hydrogen explosions have occurred throughout the history of nuclear power (i.e., see accident scenarios and consequences represented by the Fukushima Daiichi power station). This demonstrates that catastrophic accidents, as those triggered by beyond design basis accidents, and represented, for example, by extreme seismic, tsunami, combined with loss of power grid events, have an unacceptable safety and economic impact even though their probability of occurrence is very low as predicted by probabilistic risk assessments.

Another key requirement for transportable MMR designs is the total weight represented by the power producing system. Application number PCT/US2013/059445 describes a "Modular Transportable Nuclear Generator" formed by a nuclear core integrated with the power conversion unit. In this example, the core is developed as a super-critical system controlled over time by active control mechanisms and burnable neutron absorbers embedded all together with the fuel. For this system to be operational, the total mass of the core, power conversion system, integral pressure vessel and shields is still too high for commonly available lifting and transporting equipment. Additionally, the heat rejection represented by this system during normal operations and off-normal conditions still poses serious challenges to ensure the temperature at the center of a relatively large core remains within safe margins under all credible design basis operating and accident scenarios.

WO99/45545 discloses a nuclear power generator having a nuclear fuel assembly which is periodically adjacent first to a first nuclear reactor containing fresh nuclear fuel where the fuel assembly achieves a supercritical state, and then adjacent to a second nuclear reactor containing spent nuclear fuel where delayed neutrons resulting from the supercritical state of the fuel assembly cause a supercritical state in the spent fuel thereby releasing heat.

### SUMMARY

The present invention relates to nuclear power generation by means of modular subcomponents that form critical and super-critical systems when assembled to form a whole system, thus enabling power generation via clusters of mobile Micro Modular Reactors (MMRs) that can match various power demands at sites with a weak power grid or sites wherein one or multiple MMRs represent a power station feeding the local power grid. The MMR proposed interfaces with the power grid directly, or via switchyard/sub-station, it can also support power generation wherein the MMR represents the grid (island power generation) as required for remote "off-the-grid" applications. In particular, the present invention relates to various power generation components that utilize fission and decay heat nuclear energy to, for example, provide electricity and process heat to mobile units (i.e. marine vessels) and to stationary installation (i.e. land and sea oil-rigs). The present invention can also provide support power to non-dispatchable renewable energy generators (i.e. wind, solar), as well as to forward operating and remote military bases as its functioning is not impaired by environmental extremes and does not require infrastructure at the site of deployment.

It is an object of the present invention to provide a transportable fully sealed sub-critical power generator module which provides shielding to gamma radiation during transport and neutron and gamma radiation during normal operation, and satisfies the following requirements: i) it is light weight and fully contained within dimensions and weight requirements characterizing conventional transport cargo via containers under the International Organization for Standardization (ISO-containers) to ensure transportability via standard transport platforms; ii) it is inherently sub-critical and becomes super-critical only when multiple sub-critical modules are assembled together at the deployment site; iii) does not require on-site Balance of Plant (BoP) connections as the proposed MMR is operational independently of the electric load type (power grid, sub-station, switchyard) and performs rapid load following; iv) only relies on environmental air for cooling; v) each sub-critical module provides a "universal core platform" so as to offer an interface for various types of fuel and moderators all contained within a "universal fuel cartridge" loaded with non-proliferant fuels enriched to significantly less than 19% while providing a minimum of 3,650 Full Effective Power Days (FEPD) at minimum 11 MWth (Mega-Watt-thermal); vi) each sub-critical module, at the end of the fuel cycle, fits within standard waste disposal canisters and automatically generates electricity for underground permanent storage to satisfy thermal loading requirements at permanent geological repositories; vii) can be operated remotely; viii) provides extra-pressure vessel control capabilities; ix) provides sealed access to sub-critical cores for sensors and probes to ease their replacement or refurbishment; x) provides protected access via sealed ports integrated within sub-critical core regions to support selective isotopic production; xi) can withstand hostile attacks without releasing volatiles even under breached core scenarios; xii) complies with "zero-evacuation planning zone" requirements (as it does not produce volatiles under worse case hostile attack or sabotage scenarios).

The advantages mentioned above are attained by the invention as defined in claim 1.

Additional objects and advantages of the invention will be set forth in part in the description that follows, and in part will be obvious from the description, or may be learned by practice of the invention. The objects and advantages of the invention will be realized and attained by means of the elements and combinations particularly pointed out in the appended claims.

It is to be understood that both the foregoing summary description and the following detailed description are exemplary and explanatory only and are not restrictive of the invention as claimed.

### BRIEF DESCRIPTION OF THE DRAWINGS

The accompanying drawings, which are incorporated in and constitute a part of this specification, illustrate the invention together with the description and serve to explain the principles of the apparatus and methods describing the MMR and its various components.
Fig. 1 A is a perspective view of the transportable MMR for power generation, according to an exemplary embodiment.
Fig. 1B is a perspective view of the transportable MMR for power generation, according to an exemplary embodiment.
Fig. 2A is a schematic of a fully sealed sub-critical power module (SSM), containing the integral Power Conversion Unit (PCU), control means, radiation shielding and thermal transfer means.
Fig. 2B is a perspective view of the transportable SSM showing the central portions dedicated to interface with external control means (extra-core control system).
Fig. 2C is a functional schematic of the SSM comprising the PCU with its power components and the Universal Core Cartridge (UCC) designed to interface different types of nuclear fuels.
Fig. 3A is a front view representation of three SSMs coupled to form a supercritical (operational) power system.
Fig. 3B is a perspective view of the SSMs showing the ability of each SSM to slide off position to execute misalignment of geometric and material buckling.
Fig. 3C is a perspective view of three subcritical fully integrated SSMs positioned within a heat transfer and shielding structure contained in an ISO transport container.
Fig, 4A is a perspective view of three SSMs assembled so as to form a single core to meet material and geometric buckling requirements and produce power.
Fig. 4B illustrates the operations of the SSM insertion for mechanical support once coupled to a structure fully integrated within an ISO transport container.
Fig. 5A illustrates a preferential but not limiting nuclear fuel configuration in the shape of a hexagonal hollow rod equipped with partial cooling channel in its periphery.
Fig. 5B is a more detailed and expanded view of the components forming the hexagonal hollow rod.
Fig. 5C is a top simplified view of seven hexagonal hollow rods coupled together and forming mechanical support.
Fig. 5E is a perspective view of a portion of the hollow hexagonal rod prior to fuel loading (shown hollow).
Fig. 5F illustrates a method in which each hexagonal fuel rod becomes structurally supported by means of cooling channels coupled as shown.

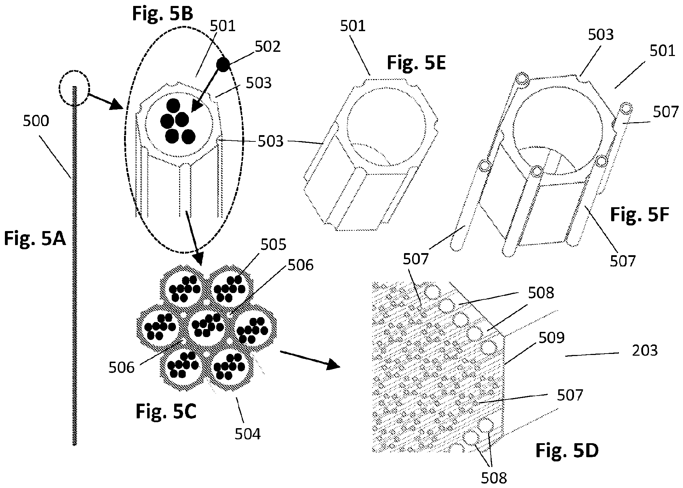

Fig. 5D is a cutaway perspective view of the Universal Core Cartridge (UCC) internals.

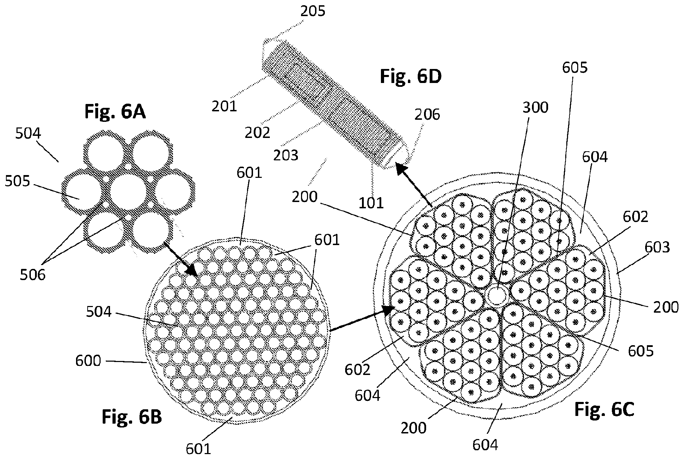

Fig. 6A shows a top view of a cluster of seven hexagonal fuel rods illustrating the formation of cooling channels all around the fuel contained inside the rod (shown empty for clarity).
Fig. 6B. is a top view of a fuel bundle formed by several hexagonal fuel rods wherein cooling channels are formed in the surrounding of each hexagonal rod and larger cooling channels are formed between the inner walls of the fuel bundle and the hexagonal fuel rod matrix (internal fuel elements removed for visual clarity).
Fig. 6C is a top view of 6x SSMs containing a certain number of fuel bundles sealed within the UCC.
Fig. 6D is a schematic view of a complete SSM.

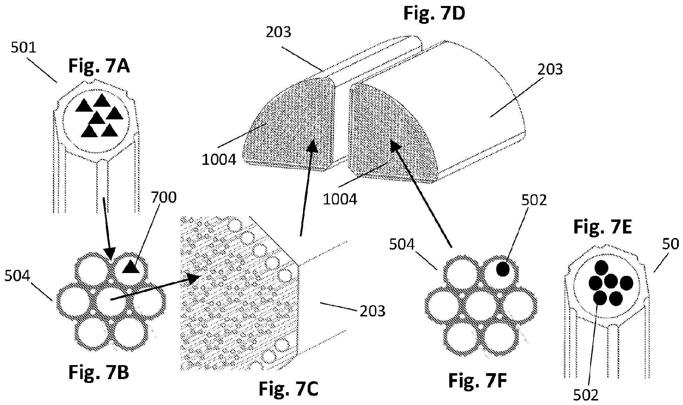

Fig. 7A illustrates a hexagonal fuel rod.
Fig. 7B illustrates a portion of fuel matrix as described in Figures 6A-6C.
Fig. 7D is a perspective view of two subcritical core portions.
Fig. 7F illustrates a portion of fuel matrix as described in Figures 6A-6C.
Fig. 7C shows a cutaway portion of the UCC showing the cooling channel forming guides to guide the hexagonal fuel rods during UCC loading, support and cool the fuel when the UCC is permanently sealed and operational.

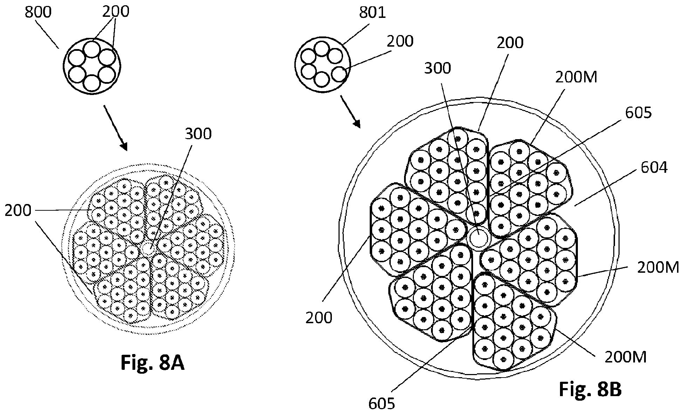

Fig. 8A is a top view representation of 6x SSM configured to be aligned to match geometric and material buckling (a necessary configuration for any core to produce power).
Fig. 8B is a top view representation of 6x SSM.

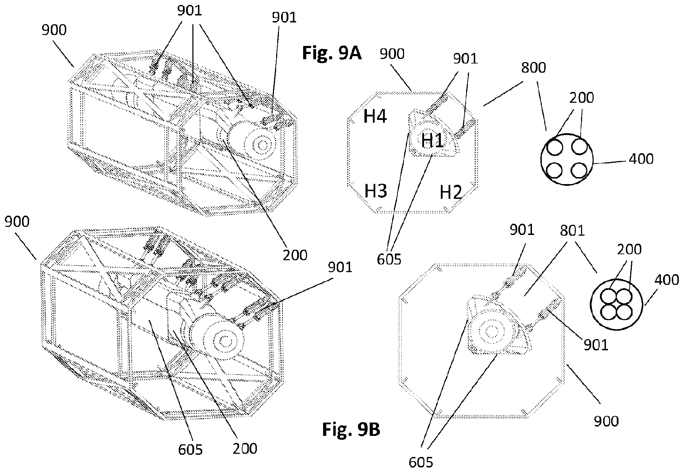

Fig. 9A is a perspective view of an embodiment of an exoskeletal structure and 1 -of-4 SSMs.
Fig. 9B is a perspective view of the exoskeletal supporting structure described in Fig. 9A with 1 -of-4 of the SSMs fully extended downward.

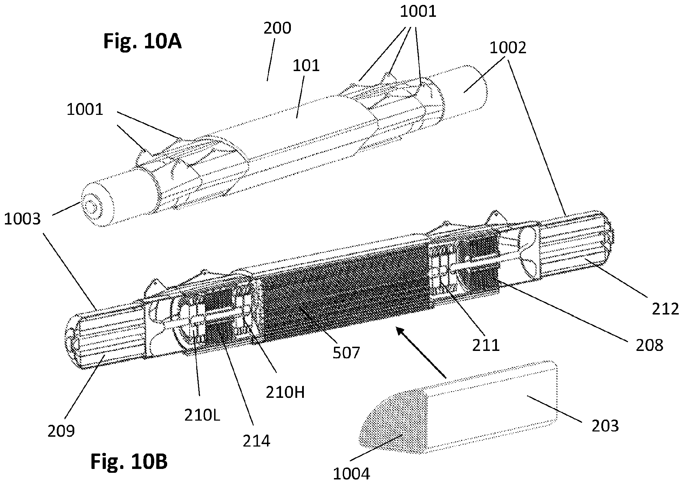

Fig. 10A is a perspective view of a single SSM fully integrated and ready for installation with the exoskeletal structure.
Fig. 10B is a cross-sectional perspective view of the SSM with emphasis on the Universal Core Cartridge sealed and integrated with the SSM power conversion systems.

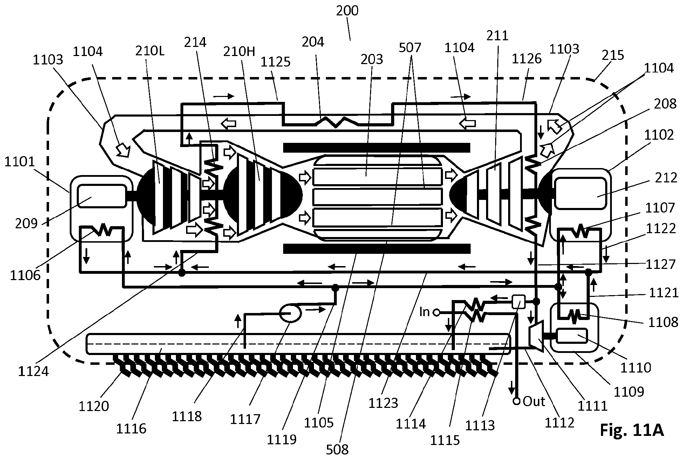

Fig. 11A is a schematic illustration of the SSM hybrid power conversion systems.

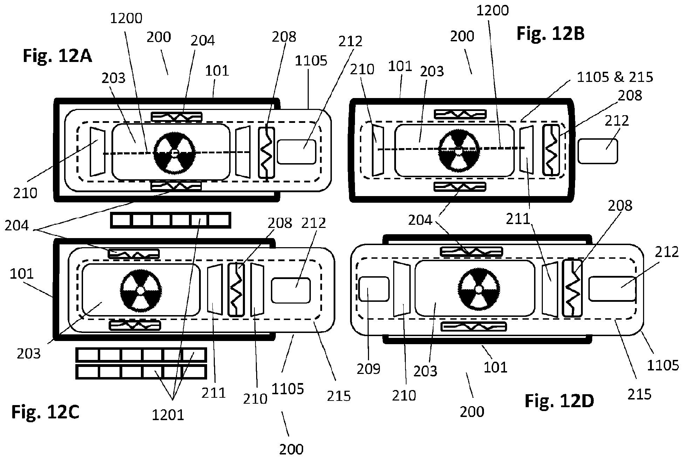

Fig. 12A is a schematic representation of a SMM.
Fig. 12B is a schematic representation of a SMM.
Fig. 12C is a schematic representation of a SMM.
Fig. 12D is a schematic representation of a SMM.

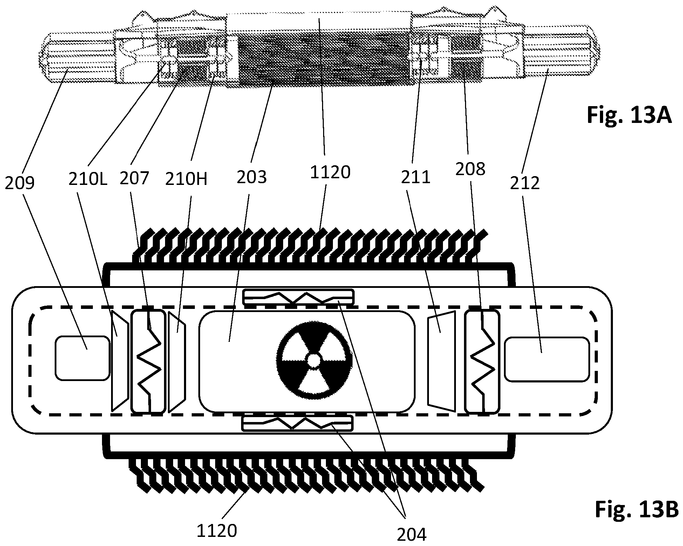

Fig. 13A is a cutaway representation of an embodiment of a single SSM.
Fig. 13B is a schematic representation of a SSM showing power conversion components and a thermal heat sink.

### DETAILED DESCRIPTION

Reference will now be made in detail to the exemplary embodiment, examples of which are illustrated in the accompanying drawings.

Wherever possible, the same reference numbers will be used throughout the drawings to refer to the same or like parts.

### Nomenclature in the drawings and embodiment descriptions

100 Sealed Integral Power generator
101 Radiation shield
102 Shield head
103 ISO Container
104 Battery banks
105 Remote control system link
200 SSM (Sealed subcritical power module)
200M Misaligned SSM
201 PCU (Power Conversion Unit)
202 Internal Control Means
203 Universal Core Cartridge (UCC)
204 Recuperator Heat Exchanger
205 Working fluid and control/monitor cables port
206 High-Voltage Conditioned Power Outlet
207 Extra core control means
208 Power Turbine Discharge HEX
209 Compressor motor
210 Compressor turbine stages
21 OH Compressor turbine stages High-pressure
210L Compressor turbine stages Low-pressure
211 Power turbine stages
212 Generator
213 SSM head
214 Intercooler HEX
215 Internal SSM pressure boundary
216 SSM displacement sliding system
300 Extra core control means
400 SSM Integral power generator removable head housing shield
401 SSM Integral power generator exoskeletal structure
500 Fuel heat transfer sleeve
501 Fuel element loaded with solid fuel (i.e. TRISO) composition A
502 TRISO fuel
503 Partial cooling channel guide
504 Fuel heat transfer matrix
505 Loaded fuel heat transfer sleeve
506 Complete fuel cooling channel guide
507 UCC internal cooling tubes
508 Instrumentation, Control, internal tubes
509 Unsealed edge of UCC chamber
600 Fuel bundle
601 Fuel Bundle Internal cooling channels (coolant flow)
602 Internal SSM cooling channels
603 Equivalent to 101 radiation shield
604 External SSM cooling channels (coolant flow)
605 Critical mass and geometry interface
700 Fuel element loaded with solid fuel (i.e. TRISO) composition B
800 SSM configured for power (aligned Fuel Geometry and Mass Buckling)
801 SSM configured for shutdown or lower power (misaligned Fuel Geometry and Mass Buckling)
900 Multiple SSM Exoskeletal Structure (fits within ISO container)
901 SSM Active and Passive aligning mechanisms
H1 -H4 Holos 1 -4 SSMs
1001 SSM external mechanical couplers
1002 Generator housing
1003 Compressor/recirculator motor housing
1004 universal core cartridge sealed tube header
1101 Motor/recirculator cooling jacket
1102 Generator cooling jacket
1103 internal working fluid conduits (Brayton cycle portion)
1104 Core cooling working fluid (first fluid)
1105 Core reflector
1106 Motor/recirculator HEX
1107 Generator HEX
1108 Generator ORC or SRC HEX
1109 Generator ORC or SRC cooling jacket
1110 Generator ORC or SRC
1111 ORC or SRC turbine
1112 ORC or SRC turbine discharge
1113 Process heat HEX control
1114 Process heat HEX shell side
1115 Process heat HEX tube side
1116 Reservoir ORC or SRC fluid (second fluid)
1117 ORC/SRCpump
1118 ORC/SRC pump suction tube
1119 ORC/SRC pump discharge conduit
1120 Heat sink to environmental air (3rd fluid) and Radiation shield
1121 Generator ORC/SRC HEX discharge tube
1122 Generator HEX discharge tube
1123 High-pressure power and intercooler HEXs tube
1124 intercooler inlet high-pressure tube
1125 intercooler outlet high-pressure tube
1126 Recuperator HEX high-pressure tube
1127 Power turbine discharge HEX tube
1200 Mechanical coupler
1201 Battery bank repurposed as shields

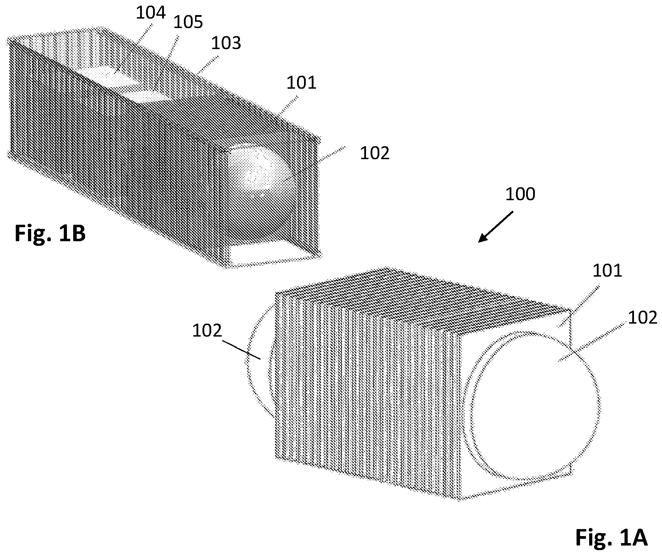

With reference to Fig. 1A, the sealed integral power generator 100 is shown in a simplified and perspective view. According to an exemplary embodiment of the invention, the sealed integral power generator 100 comprises a radiation shield 101 that also provides thermal coupling for heat rejection from the internal components of the power generator to the environment. The power generator 100 comprises the radiation shield 101 and two hemispherical heads 102 providing radiation shielding at both ends while providing a pressure boundary separating the internal environment of the power generator 100 with the environment outside of the transport container 103. Overall, the whole power generation module fits inside the ISO contained 103 shown in Fig. 1B so that it can be transported through common transport equipment.

Accordingly, in Fig. 1B, illustrating a perspective view of the transportable micro modular power generator 100, the sealed integral power generator is fitted inside a standard transport container 103 whose structure and walls are also utilized as heat transfer mechanisms to transfer thermal energy from the power generator 101 to the environment. Inside the ISO container 103, auxiliary components, such as battery banks 104 and equipment to execute remote control 105, for example, via wireless link are also shown along with the power generator 100. The battery banks are utilized to support load following operations, start-up operations and provide radiation shielding from the power generator 100 to the environment outside of transport container 103.

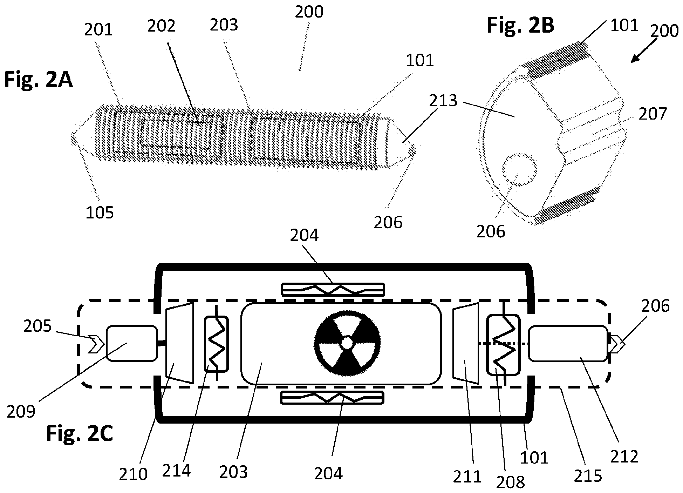

Fig. 2A is a schematic of a fully sealed sub-critical power module (SSM) forming the power generator 100. As the weight of the whole power generator 100 inclusive of shields might overcome lifting requirements of standard lifting and transporting equipment, the power generator is formed by integral fully equipped sealed sub-critical power modules (SSMs) 200 as shown in Fig. 2A. The SSM 200 comprises an integral Power Conversion Unit (PCU) 201, internal control means 202, a universal core cartridge (UCC) 203, radiation shielding 101, also representing thermal transfer means, an access port 105 for remote control (i.e. link to off-site control stations), and a port or connector 206 for conditioned electric power with load-following self-regulating characteristics.

With reference to Fig. 2B, a perspective view of the transportable SSM 200, the central portions 207 of the sub-critical module are shown. In this area of the SSM a series of noncontact interfaces are in place to allow interactions with extra-core control mechanisms - therefore operated outside of the core and the pressure boundary represented inside the core.

Fig. 2C is a functional schematic of the SSM comprising the PCU with its power components and the Universal Core Cartridge (UCC) 203 configured to operate with different types of nuclear fuels. As shown in this Figure, the power conversion unit is fully integrated within the SSM pressure boundary and, in this configuration, operates with two distinct turbomachinery components. The compressor or recirculator 210 is electrically driven by motor 209, while the power turbine 211 operates as a result of the working fluid, or first fluid, expanding. The first fluid can be configured as a gas for cooling of the UCC 203, however, any fluid with thermal- and radiation-properties compatible with the type of fuel and thermodynamic cycle operating in the SSM 200 can be utilized. After expansion in power turbine 211, the first fluid transfers a portion of its energy content to a recuperator heat exchanger 208. A more detailed description of the thermodynamic functions of the PCU 201 inside the pressure boundary denoted by 215 will be provided with reference to Fig. 11A. In the configuration shown in Fig. 2C, the PCU components integrated with the SSM 200 are all operating within the internal SSM pressure boundary.

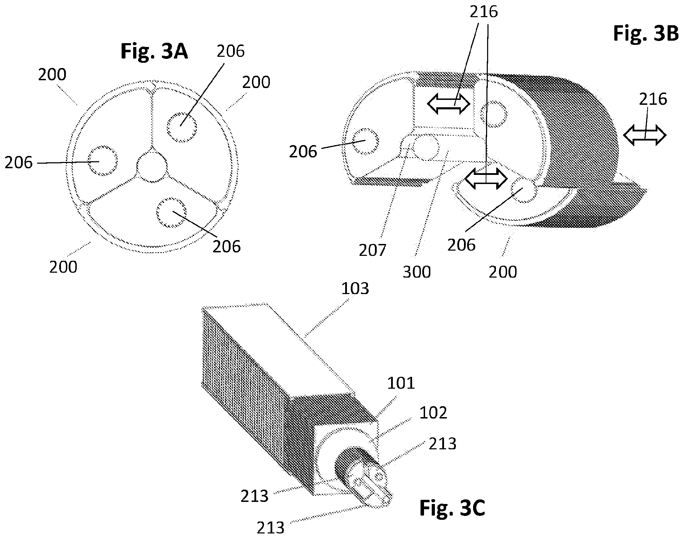

Fig. 3A illustrates a front view representation of three distinct SSMs 200 coupled to form a super-critical (operational) power system. In this configuration, each SSM 200 is supported in a mannerthat can be translated with respect to one another as shown in Fig. 3B. In this manner, the "geometric and material buckling" characteristics necessary for any nuclear system to become critical, supercritical or subcritical can be altered by sliding the SSM to form a compact core as a "whole" system when they are all adjacent, parallel and forming a compact or expanded configuration. Should the mechanisms providing actuation of the SSMs movement become jammed or malfunction, the extra core control system 300 can be utilized to force sub-critical conditions by presenting neutron absorbing materials in solid or liquid form in the central portions of the whole core formed by multiple sealed sub-critical UCCs 203.

Fig. 3C is a perspective view of the power generator 100 inside the transport container 103 illustrating the ability of each SSM 200 to slide off desired positions so as to execute misalignment or alignment of the geometric and material buckling required by the nuclear system to produce sustained chain reactions (power), thus control fissioning reactions without the need to insert control rods within each partial core (UCC 203) comprised in each individual SSM. For example, as shown in Fig. 3C one of the SSM 200 is fully inserted, another is partially inserted, and the third one is positioned in a manner that is sub-critical core is not aligned with any of the sup-critical cores of the other SSMs 200 in this configuration.

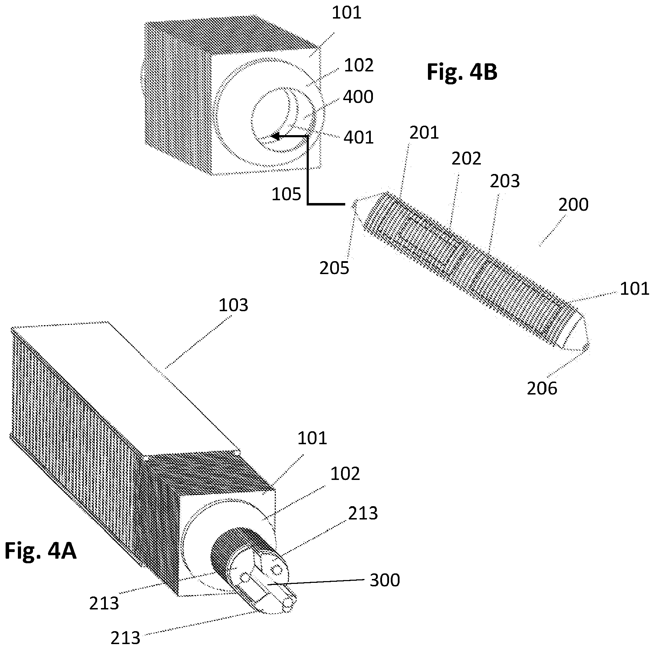

Fig. 4A and 4B provide perspective views of 3x SSMs configured so as to form a whole core when each of the 3x SSM is fully inserted in the power generator through a removable power generator removable head housing through an exoskeletal structure 401 configured to provide to mechanical support and actuation of slide mechanisms to slide each SSM 200 in and out of alignment with one another.

Fig. 5A illustrates an exemplary nuclear fuel configuration. In this figure, a fuel sleeve hexagonally shaped is equipped with partial channel in its periphery so as to provide structural functions while housing various types of nuclear fuels, and thermally couple the nuclear fuel to the first fluid coolant. With reference to Fig. 5A, the fuel sleeve 500 can be shaped as shown in Fig. 5B wherein 501 represents a portion of a fuel element comprising, in this example, TRISO or other types of ceramic fuels 502. When multiple sleeves are coupled side by side, they form fuel heat transfer matrix 504 wherein the combination of partial cooling channel guides 503 form a cylindrically shaped cooling channel 506. The first fluid coolant can then flow through the cooling channels 506 directly, or by means of cooling tubes comprised with the UCC as shown in Figures 5F and 5D. Each single fuel heat transfer sleeve 500 can be loaded with nuclear fuel and guided within the UCC by means of tubes 507 as they form a template of guides for multiple fuel heat transfer sleeve 500 to be positioned inside the UCC 203 shown in Fig. 5D. More specifically, in Fig. 5D, the UCC 203 can be configured to form a universal heat exchanger wherein first fluid flows internally to tubes 507 without mixing with the nuclear fuel 502 inside the fuel heat transfer sleeves 500. Fig. 5D shows a cutaway section of the UCC 203 wherein fuel heat transfer sleeve 500 can be positioned to form large matrixes 504, once the fuel sleeves 500 are loaded within the UCC 203 the header of this unit can be sealed so as to resemble the configuration of sealed tube-sheets equipping various types of heat exchangers. With a similar methodology, instrumentation, isotopic production and control tubes 508 can be sealed within the UCC so as to provide access to various regions of the subcritical core without interacting with the UCC pressure boundary.

Fig. 6A shows the top view of a cluster or matrix 504 of hexagonal fuel sleeves (7 shown in this configuration) to illustrate the formation of cooling channels beyond the cooling channels dedicated to fuel cooling (channels 506 formed by coupling multiple partial channels 503 shown in Fig. 5B) all around the fuel contained inside the fuel sleeves (shown empty in this figure for clarity). Fig. 6B is a top view of a fuel bundle 600 formed by several hexagonal fuel sleeves wherein cooling channels are formed in the surrounding of each hexagonal sleeve (channels 506 shown in Fig. 5C) and additional, larger, cooling channels 601 formed between the inner walls of the fuel bundle 600 and the walls of the hexagonal fuel sleeve matrix 504 (internal fuel elements removed for visual clarity).

Fig. 6C is an exemplary top view illustration of, in this case, 6x SSMs 200 containing fuel bundles sealed within a differently configured UCC and each of these SSMs 200 integrate their independent PCU 201. This figure shows that the number of SSM 200 is flexible and mainly depends on dimensional constraints, weight limitations, allowed enrichment levels (i.e. <19% to meet non-proliferation requirements), Full Effective Power Days (FEPDs), and power ratings. The adoption of a nuclear generator with SSM 200 architecture allows meeting different requirements and power ratings.

As the SSMs 200 operate with universal core cartridges (UCC) 203, and each UCC can be loaded with different fuels (the "whole" core neutronics is the result of the coupled neutronics produced by each sub-critical sealed module 200), Fig. 7A and 7B illustrate a hexagonal fuel sleeve loaded with a certain type of fissile and fissionable material 700 configured to be loaded within a UCC 203. In Fig. 7F and 7D a hexagonal fuel sleeve is loaded with a different type of nuclear fuel 502 (i.e. TRISO), and this type of fuel is ultimately loaded with another UCC 203. This illustrates that the whole core of the power generator 100 can be formed by substantially different isotopic fissile and fissionable species. For example, consider a transportable power generator 100 formed by 6x SSMs 200 as shown in Fig. 6c, and assume that 1 of the 6 SMMs could be laded with a Thorium-based fuel, another SSM in this configuration could be loaded with a UCC 203 based on Uranium, and another with Plutonium. In other words, the SMM architecture enables burning of different species of nuclear fuels.

Fig. 8A is a top view representation of 6x SSM configured to be centrally aligned and therefore match geometric and material buckling requirements for the nuclear system to produce power, in this figure (top) the whole core is represented as a combination of geometrically symmetrical cylindrical SSMs (this core configuration

Fig. 8B is a top view representation of 6x SSM configured to be misaligned, therefore the geometric and material buckling requirement is not met. In this case, the geometry formed by positioning the SSM 200 denoted with 200M (misalignment) is such that the whole core is asymmetrical, thereby inducing the core as a coupled neutronic system to sub-critical conditions, for example to maintain the power generator 100 in a shutdown configuration.

Fig. 9A shows a perspective view of a preferential embodiment of the present invention, wherein an exoskeletal structure 900, fitted inside a transport container 103, provides structural support with active and passive (gravity driven) means to actuate accurate movement of the SSMs with respect to one another. In this configuration 4x SSMs form a "whole" core, for visual clarity only 1 -of-4 SSMs is shown. In this representation, the exoskeletal structure 900 is configured to provide mechanical coupling to unload the SSM 200 from transport equipment (if the SSM 200 is transported individually), alternatively, structure 900 can house all of the 4x fully operational SSMs 200 forming the power generator 100. The mechanical features provided by structure 900 and not shown in this Figure, include coupling to shields for radiation protection and for protection against hostile or accidental environmental events (projectiles aimed toward the power generator 100). As the SSM 200 is loaded into the exoskeletal structure 900, a series of passive and active actuator 901, for example gravity and/or hydraulically driven, actuate the positioning of the SSM 200 in real time and with respect to each SSMs populating the exoskeletal structure 900. Only "Holos" (which means "whole" in Greek), Module H1 is shown in Fig. 9A. The whole core configuration 800 is in this case represented by all 4x SSMs positioned far away from one another. This results in a power module 100 shutdown as all critical surfaces 605, corresponding to the internal position of the UCC 203 equipping each module, are distant from one another. Under this configuration, the SSMs are neutronically uncoupled. As each independent SSM provides a sub-critical system, uncoupled neutronics results in no power generation. On the other hand, in Fig. 9B, the whole core configuration 801 shows the actuators 901 fully extended, thereby providing neutronic coupling by and leading the power generator 100 to produce power. External control means actuated simultaneously when each SSM is, for example, lifted and ensuring neutronic links/couplings among different UCCs 203 are interrupted are not shown in these representations.

Fig. 10A is a perspective view of a single SSM 200 fully integrated and ready to be coupled to the exoskeletal structure 900 shown in Fig. 9A and 9B. In this Figure, the SSM 200 is shown without shields to simplify its visual representation. Fig. 10B is a cutaway representation of the SSM 200 illustrating the key internal components forming the sub-critical module. Accordingly, with reference to both Figures 10A and 10B, the SSM 200 can be mechanically coupled to the exoskeletal structure 900 by mechanical couplers 1001, compressor/recirculator housing 1003 contains the motor stator/rotor assembly 209 and is thermally insulated form the first fluid (working fluid) circulating in the Brayton power cycle system described in Fig. 11A. The SSM 200 shown in Fig. 10B is equipped with low and high pressure compressor turbines 210L and 21 OH respectively, an intercooler heat exchanger 214, the UCC 203 with cooling tubes 507 (as their number is very large, the visual effect is of a dark region - see Fig. 5D for a clearer visualization of tubes 507 inside the UCC 203). On the power generation side of the SSM 200, a portion of the power turbine 211 is shown along with a portion of the recuperator heat exchanger 208 and the generator 212. Power electronic equipment mainly formed by IGBT power modules is not shown in this representation.

Fig. 11A is a schematic illustration of the SSM hybrid power conversion systems combining a direct Brayton power cycle wherein the working fluid (first fluid) circulates while providing cooling to the UCC, and a Rankine (steam or organic) power cycle with a second fluid (organic or steam) to enhance SSM efficiency while reducing thermal loading on the heat exchangers utilized on the Brayton side of the power cycle. The SSM 200 does not need the ORC or SRC Rankine cycle to operate, this additional thermodynamic engine is provided to enhance efficiency, lower thermal loading and size of the heat exchangers forming the Brayton power cycle, and ensures cooling when the SSM is disposed of (10-15 years later) at a temporary or permanent storage facility. With reference to Fig. 11A starting from the top left of the schematic representation, the internal working fluid (first fluid) 1104 flows through conduits or channels 1103. As the compressor/recirculator motor 209 is pressurizing the first fluid 1104 it also heats it up. Intercooler heat exchanger 214 cools down the first fluid prior to entering a second stage of compression at the high-pressure compressor stages 21 OH. Compressed first fluid 1104 then inlets the UCC 203 through tubes 507 without mixing with the fuel and moderator materials contained inside the UCC 203. As first fluid 1104 outlets the UCC 203, it expands in the power turbine 211 to convert thermal energy into electricity via generator 212. As first fluid is discharged by turbine 211 it transfers thermal energy to the power turbine discharge heat exchanger 208 and recuperator heat exchanger 204 as it flows through internal conduits 1103 to represent itself to the compressor turbine low pressure stage 21 OL and reset the Brayton cycle. A second fluid contained in the heat exchanger and water reservoir 1116 is pressurized by pump 1117 discharging to a manifold that provides cooled second fluid to the motor/recirculator heat exchanger 1106, the ORC or SRC generator 1110 heat exchanger 1108 and the generator 212 heat exchanger 1107, prior to entering the tube-side of intercooler heat exchanger 214, recuperator heat exchanger 204 and turbine discharge heat exchanger 208 for final expansion into ORC or SRC turbine 1111 to produce conditioned electric power coupled to the main SSM 200 generator 212. Second fluid discharged by turbine 1111 condenses back to reservoir and heat exchanger 1116. This heat exchanger transfers thermal energy to environmental fluids (i.e. third fluid, air orwater). Heat exchanger and reservoir 1116 is equipped with fins to shield neutrons all together with gammas during SSM operations. Process heat control valve 1113 can be activated to provide process heat to an external fluid circulating on the tube side of heat exchanger 1115.

Fig. 12A is a schematic representation of a SMM 200 configured to provide compression for the first fluid operating though the Brayton power cycle by means of mechanical coupling 1200 among all rotary components (turbines 210 and 211).

Fig. 12B is a schematic representation of a SMM configured to provide compression for the working fluid operating though the Brayton power cycle by means of mechanical coupling 1200 among all rotary components and magnetic coupling to maintain the electric generator 212 outside of the pressure boundary 1105 characterizing the internals of the SSM.

Fig. 12C is a schematic representation of a SMM 200 configured to provide compression for the working fluid operating though the Brayton power cycle by means of mechanical coupling among all rotary components, wherein the electric generator 212 is configured to operate inside the SSM pressure boundary. In this figure, batteries banks 1201 are utilized for load following, start-up and as effective radiation shields.

Fig. 12D is a schematic representation of a SMM configured to provide compression for the working fluid operating though the Brayton power cycle with electrical coupling among rotary components, wherein the compressor or recirculator electric motor 209 and the electric generator 212 are both configured to operate internally to the SSM pressure boundary.

Fig. 13A is a cutaway representation of a preferential embodiment of the present invention wherein a single SSM may be configured to operate as a "whole" core by means of changing the material composition of the fuel loaded within the UCC.

Fig. 13B is a schematic representation of the SSM 200 of the present invention showing the power conversion components and a thermal heat sink 1120 that provides also radiation shielding even when the reactor is in operation as its shape prevents neutrons from traveling outside of the convoluted paths forming the heat sink and shield.

The preceding description of the disclosed embodiments is provided to enable any person skilled in the art to make or use the claims. Various modifications to these embodiments will be readily apparent to those skilled in the art, and the generic principles defined herein may be applied to other embodiments and implementations without departing from the scope of the claims. Thus, the present disclosure is not intended to be limited to the embodiments and implementations described herein, but is to be accorded the widest scope consistent with the following claims.

## Claims

1. A transportable nuclear power generator (100), comprising:
• a plurality of subcritical power modules (200), each comprising:
∘ a fuel cartridge (203) containing a nuclear fuel (502) and having a proximal end and a distal end;
∘ a power conversion unit (201) comprising:
▪ a compressor turbine (210) disposed at the proximal end of the fuel cartridge (203) and driven by a compressor motor (209); and
▪ a power turbine (211) disposed at the distal end of the fuel cartridge (203) to convert thermal energy into electricity via a generator (212);
∘ a pressure boundary (215) substantially enclosing the fuel cartridge (203), the compressor turbine (210), the power turbine (211); and
∘ heat exchangers (204, 208, 214),
• actuators (901) adapted to move each of the subcritical power modules (200), wherein at least one of the plurality of subcritical power modules (200) is movable with respect to the other of the plurality of subcritical power modules (200) between a first position and a second position to control criticality of the nuclear fuel (502) contained in the fuel cartridges (203) of the plurality of subcritical power modules (200),wherein the nuclear fuel (502) in the fuel cartridges (203) of the plurality of subcritical power modules (200) is configured to remain in a sub-critical state when the at least one of the plurality of subcritical power modules (200) is in the first position, and
wherein the nuclear fuel (502) in the fuel cartridges (203) of the plurality of subcritical power modules (200) is configured to reach a critical state when the at least one of the plurality of subcritical power modules (200) is in the second position.

2. The nuclear power generator (100) of claim 1, wherein the plurality of subcritical power modules (200) comprises at least three subcritical power modules (200).

3. The nuclear power generator (100) of claim 1 or 2, wherein the plurality of subcritical power modules (200) collectively form a substantially circular outer shape when the at least one of the plurality of subcritical power modules (200) is in the second position.

4. The nuclear power generator (100) of any of the preceding claims, wherein each of the plurality of power conversion units (201) operates combining a Brayton cycle wherein the compressor turbine (210) and the power turbine (211) are configured to convert heat generated from the fuel cartridges (203) of the plurality of of subcritical power modules (200) via a working fluid and a Rankine power cycle with a second fluid.

5. The nuclear power generator (100) of any of the preceding claims, wherein the fuel cartridges (203) of the plurality of of subcritical power modules (200) do not include a control rod for controlling the criticality of the nuclear fuel (502).

6. The nuclear power generator (100) of any of the preceding claims, wherein the fuel cartridges (203) of the plurality of of subcritical power modules (200) comprise an internal tube (508) for inserting instrumentation or isotope production equipment inside the fuel cartridge (203).

7. The nuclear power generator (100) of any of the preceding claims, wherein the fuel cartridges (203) of the plurality of of subcritical power modules (200) comprise a plurality of fuel sleeves (500) for receiving the nuclear fuel (502) therein, each of the plurality of fuel sleeves (500) comprising a hexagonal outer shape and a circular inner shape.

8. The nuclear power generator (100) of claim 7, wherein the plurality of fuel sleeves (500) are stacked against one another in a matrix (504), forming fuel heat transfer matrix (504) wherein the combination of partial cooling channel guides (503) form a cylindrically shaped cooling channel (506).

9. The nuclear power generator (100) of claim 8, further comprising a cooling tube (507) disposed inside each of the plurality of cooling channels (506).

10. The nuclear power generator (100) of any of the preceding claims, further comprising a battery bank (104) for supporting a load-following operation.

11. The nuclear power generator (100) of any of the preceding claims, wherein each of the plurality of subcritical power modules (200) comprises a central portion (207) that, together with one or more central portions (207) of the other of the plurality of subcritical power modules (200), collectively defines a central channel.

12. The nuclear power generator (100) of claim 11, wherein the central channel is positioned substantially at a center of the nuclear power generator (100).

13. The nuclear power generator (100) of claim 12, further comprising an extra core control system (300) configured to move along the central channel.

14. The nuclear power generator (100) of any of the preceding claims, wherein the actuators (901) are configured to horizontally move the at least one of the plurality of subcritical power modules (200) relative to the other of the plurality of subcritical power modules (200).

15. The nuclear power generator (100) of claim 14, wherein the actuators (901) are configured to vertically move the at least one of the plurality of subcritical power modules (200) relative to the other of the plurality of subcritical power modules (200).

16. The nuclear power generator (100) of any of the preceding claims, wherein the at least one of the plurality of subcritical power modules (200) is movable from at least one of the first and second positions to a third position.

## Patentansprüche

1. Ein transportabler nuklearer Stromgenerator (100), bestehend aus:
einer Mehrzahl unkritischer Energiemodule (200), jeweils bestehend aus:
einer Brennstoffzelle (203) beinhaltet mit nuklearem Brennstoff (502) und versehen mit einem proximalen und einem distalen Ende;
einem Leistungswandler (201), bestehend aus:
einer Verdichtungsturbine (210), angebracht am proximalen Ende der Brennstoffzelle (203), und
einer Leistungsturbine (211), angebracht am distalen Ende der Brennstoffzelle (203); sowie
einer Druckbegrenzung (215), im Wesentlichen zum Einschluss der Brennstoffzelle (203), der Verdichtungsturbine (210), der Leistungsturbine (211), und des
Hitzewandler (204, 208, 214),
Regler (901) zur Bewegung der unkritischen Energiemodule (200), wobei mindestens eine der Vielzahl der unkritischen Brennstoffmodule (200) beweglich gegenüber der anderen der Vielzahl unkritischer Brennstoffmodule (200) zwischen der ersten und der zweiten Position zur Steuerung der Kritikalität des nuklearen Brennstoffes (502) innerhalb der Brennstoffzellen (203) innerhalb der zahlreichen unkritischen Brennstoffmodule (200), wobei der nukleare Brennstoff (502) innerhalb der Vielzahl der Brennstoffzellen (200), wobei der nukleare Brennstoff (502) in den Brennstoffzellen (203) in der Masse der unkritischen Brennstoffmodule (200) so konfiguriert sind, dass sie im unkritischen Zustand verbleiben, wenn zumindest eines der unkritischen Leistungsmodule (200) sich in der ersten Position befindet, und
wobei der nukleare Brennstoff (502) in den Brennstoffzellen (203) als Teil der mehrfachen unkritischen Brennstoffmodule (200) so konfiguriert ist, dass sie einen kritischen Zustand erreicht, wenn mindestens eine der mehreren anderen unkritischen Brennstoffmodulen (200) in der zweiten Position ist oder sind.

2. Der nukleare Stromerzeuger (100) gemäß Anspruch 1, wobei die vielen unkritischen Brennstoffmodule (200) so ausgelegt sind, dass sie mindestens drei unkritische Brennstoffmodule (200) beinhalten.

3. Der nukleare Stromerzeuger (100) gemäß der Ansprüche 1 oder 2, wobei die vielen unkritischen Brennstoffmodule (200) so ausgelegt sind, dass sie zusammen eine äußerlich runde Form haben, wenn sich wenigstens eine der vielen unkritischen Brennstoffmodule (200) sich in Position zwei befindet.

4. Der nukleare Stromerzeuger (100) gemäß der vorangegangenen Ansprüche, wobei jede der vielen Energietransformierungseinheiten (201) in einem Brayton Zyklus arbeiten, wobei die Verdichtungsturbine (210) und die Leistungsturbine (211) so konfiguriert sind, dass sie die Hitze, die durch die Brennstoffzellen (203) aus den Vielzahl der unkritischen Brennstoffmodule (200) durch eine Arbeitsflüssigkeit und einer zweiten Flüssigkeit in einem Rankine Cycle verarbeitet.

5. Der nukleare Stromerzeuger (100) gemäß den vorangegangenen Ansprüchen, wobei die Brennstoffzellen (203) in der Menge der unkritischen Brennstoffmodule (200) keine Steuerstäbe zur Steuerung der Kritikalität des nuklearen Brennstoffes enthalten.

6. Der nukleare Stromerzeuger (100) gemäß jeglicher der vorangegangenen Ansprüchen, wobei die Brennstoffzellen (203) in der Menge der unkritischen Brennstoffmodule (200) eine innere Röhre (508) zur Aufnahme von Messinstrumenten oder Isotopenproduktionsgeräten innerhalb der Brennstoffstoffzelle (203) umfassen.

7. Der nukleare Stromerzeuger (100) gemäß den vorangegangenen Ansprüchen, wobei die Brennstoffzellen (203) in der Menge der unkritischen Brennstoffmodule (200) eine Mehrzahl von Brennstoffhüllen (500) zur Aufnahme des nuklearen Brennstoffes (502) darin bilden, jeweils aus eine Mehrzahl von Brennstoffhüllen (500) mit einer äußerlich hexagonalen Form und einer innerlich kreisförmigen Form bestehend.

8. Der nukleare Stromerzeuger (100) gemäß Anspruch 7, wobei die Mehrzahl der Brennstoffhüllen (500) zusammen angeordnet sind in einer Matrix (504) zur Bildung einer Hitzeübertragungsmatrix (504), wobei die Kombination der Kühlkanäle (503) insgesamt einen zylindrischen Kühlkanal (506) bilden.

9. Der nukleare Stromerzeuger (100) gemäß Anspruch 8, wobei weiterhin jeweils ein Kühlrohr (507) in jedem aller Kühlkanäle (506) angeordnet ist.

10. Der nukleare Stromerzeuger (100) gemäß den vorangegangenen Ansprüchen, weiterhin und zusätzlich ausgestattet mit einer Batteriebank (104) zur Unterstützung eines Nachladebetriebes.

11. Der nukleare Stromerzeuger (100) gemäß den vorangegangenen Ansprüchen, wobei in jedem der Vielzahl von unkritischen Brennstoffmodulen (200) ein mittlerer Bereich (207) eingesetzt ist, der zusammen mit dem oder den anderen mittleren Bereichen (207) der unkritischen Brennstoffmodulen (200) verbunden ist und damit einen zentralen Kanal bildet.

12. Der nukleare Stromerzeuger (100) gemäß Anspruch 11, wobei der mittlere Kanal im wesentlichen in der Mitte des nuklearen Stromerzeugers (100) angeordnet ist.

13. Der nukleare Stromerzeuger (100) gemäß Anspruch 12, wobei außerdem ein zusätzliches Kernsteuerungssystem (300) für die Bewegung innerhalb des inneren Kanals eingerichtet wird.

14. Der nukleare Stromerzeuger (100) gemäß aller vorgenannten Ansprüche, wobei die Regler (901) so angeordnet sind, dass sie horizontal mindestens eines der Vielzahl der unkritischen Brennstoffmodule (200) gegenüber den anderen unkritischen Brennstoffmodule (200) bewegen.

15. Der nukleare Stromerzeuger (100) gemäß Anspruch 14. wobei die Regler (901) so angeordnet sind, dass sie vertikal mindestens eines der Vielzahl unkritischen Brennstoffmodule (200) gegenüber den anderen unkritischen Brennstoffmodule (200) bewegen.

16. Der nukleare Stromerzeuger (100) gemäß aller vorgenannten Ansprüche, wobei mindestens eines der Vielzahl unkritischer Brennstoffmodule (200) aus mindestens der ersten und / oder zweiten Position in eine dritte Position bewegt werden kann.

## Revendications

1. Un générateur d'énergie nucléaire transportable (100), comprenant :
• une pluralité de modules de puissance sous-critiques (200), comprenant chacune :
∘ une cartouche de combustible (203) contenant un combustible nucléaire (502) et ayant une extrémité proximale et une extrémité distale ;
∘ une unité de conversion de puissance (201) comprenant :
▪ une turbine de compresseur (210) disposée à l'extrémité proximale de la cartouche de carburant (203) et entraînée par un moteur de compresseur (209) ; et
▪ une turbine de puissance (211) disposée à l'extrémité distale de la cartouche de combustible (203) pour convertir l'énergie thermique en électricité via un générateur (212) ;
∘ une enveloppe de pression (215) renfermant essentiellement la cartouche de combustible (203), la turbine du compresseur (210), la turbine de puissance (211) ; et
∘ les échangeurs de chaleur (204, 208, 214),
• des actionneurs (901) adaptés pour déplacer chacun des modules de puissance sous-critiques (200), dans lequel au moins un de la pluralité de modules de puissance sous-critiques (200) est mobile par rapport à l'autre de la pluralité de modules de puissance sous-critiques (200) entre une première position et une seconde position pour contrôler la criticité du combustible nucléaire (502) contenu dans les cartouches de combustible (203) de la pluralité de modules de puissance sous-critiques (200), dans lequel le combustible nucléaire (502) dans les cartouches de combustible (203) de la pluralité de modules de puissance sous-critiques (200) est configuré pour rester dans un état sous-critique lorsque le au moins un de la pluralité de modules de puissance sous-critiques (200) est dans la première position, et dans lequel le combustible nucléaire (502) dans les cartouches de combustible (203) de la pluralité de modules de puissance sous-critiques (200) est configuré pour atteindre un état critique lorsque le au moins un de la pluralité de modules de puissance sous-critiques (200) est dans la deuxième position.

2. Le générateur d'énergie nucléaire (100) de la réclamation 1, dans lequel la pluralité de modules de puissance sous-critiques (200) comprend au moins trois modules de puissance sous-critiques (200).

3. Le générateur d'énergie nucléaire (100) selon la réclamation 1 ou 2, dans lequel la pluralité de modules de puissance sous-critiques (200) forment collectivement une forme extérieure sensiblement circulaire lorsque le au moins un de la pluralité de modules de puissance sous-critiques (200) se trouve en deuxième position.

4. Le générateur d'énergie nucléaire (100) de l'une des réclamations précédentes, dans lequel chacune de la pluralité d'unités de conversion de puissance (201) fonctionne en combinant un cycle de Brayton dans lequel la turbine du compresseur (210) et la turbine de puissance (211) sont configurées pour convertir la chaleur générée par les cartouches de combustible (203) de la pluralité de modules de puissance sous-critiques (200)
via un fluide de travail et un
cycle de puissance de Rankine avec un second fluide.

5. Le générateur d'énergie nucléaire (100) de l'une des réclamations précédentes, dans lequel les cartouches de combustible (203) de la pluralité de modules d'énergie sous-critique (200) ne comprennent pas de barre de contrôle pour contrôler la criticité du combustible nucléaire (502).

6. Le générateur d'énergie nucléaire (100) de l'une des revendications précédentes, dans lequel les cartouches de combustible (203) de la pluralité de modules d'énergie sous-critique (200) comprennent un tube interne (508) pour insérer des instruments ou des équipements de production d'isotopes à l'intérieur de la cartouche de combustible (203).

7. Le générateur d'énergie nucléaire (100) de l'une des réclamations précédentes, dans lequel les cartouches de combustible (203) de la pluralité de modules d'énergie sous-critique (200) comprennent une pluralité de manchons de combustible (500) pour recevoir le combustible nucléaire (502) à l'intérieur, chacun de la pluralité de manchons de combustible (500) comprenant une forme extérieure hexagonale et une forme intérieure circulaire.

8. Le générateur d'énergie nucléaire (100) selon la réclamation 7, dans lequel la pluralité de gaines de combustible (500) sont empilées les unes contre les autres dans une matrice (504), formant une matrice de transfert de chaleur du combustible (504) dans laquelle la combinaison de guides de canaux de refroidissement partiels (503) forme un canal de refroidissement de forme cylindrique (506).

9. Le générateur d'énergie nucléaire (100) de la réclamation 8, comprenant en outre un tube de refroidissement (507) disposé à l'intérieur de chacun de la pluralité de canaux de refroidissement (506).

10. Le générateur d'énergie nucléaire (100) de l'une des réclamations précédentes, comprenant en outre un banc de batteries (104) pour soutenir une opération de suivi de la charge.

11. Le générateur d'énergie nucléaire (100) de l'une des réclamations précédentes, dans lequel chacun de la pluralité de modules de puissance sous-critiques (200) comprend une partie centrale (207) qui, avec une ou plusieurs parties centrales (207) de l'autre de la pluralité de modules de puissance sous-critiques (200), définit collectivement un canal central.

12. Le générateur d'énergie nucléaire (100) de la réclamation 11, dans lequel le canal central est positionné sensiblement au centre du générateur d'énergie nucléaire (100).

13. Le générateur d'énergie nucléaire (100) de la réclamation 12, comprenant en outre un système de contrôle supplémentaire du cœur (300) configuré pour se déplacer le long du canal central.

14. Le générateur d'énergie nucléaire (100) de l'une des réclamations précédentes, dans lequel les actionneurs (901) sont configurés pour déplacer horizontalement le au moins un de la pluralité de modules de puissance sous-critiques (200) par rapport à l'autre de la pluralité de modules de puissance sous-critiques (200).

15. Le générateur d'énergie nucléaire (100) de la réclamation 14, dans lequel les actionneurs (901) sont configurés pour déplacer verticalement au moins un de la pluralité de modules de puissance sous-critiques (200) par rapport à l'autre de la pluralité de modules de puissance sous-critiques (200).

16. Le générateur d'énergie nucléaire (100) de l'une des réclamations précédentes, dans lequel le au moins un de la pluralité de modules d'énergie sous-critique (200) est déplaçable d'au moins une des première et deuxième positions à une troisième position.
